# FASCICULE DE BREVET EUROPEEN

(11) **EP 1 871 652 B1**
(45) Date de publication et mention de la délivrance du brevet: **30.07.2008**
(21) Numéro de dépôt: 06743717.8
(22) Date de dépôt: 20.04.2006
(51) Int. Cl.: B62B 9/00

(54) **VOITURE D'ENFANT**
KINDERWAGEN
CHILDREN'S CARRIAGE

(30) Priorité: 21.04.2005 FR 0504007
(43) Date de publication de la demande: 02.01.2008
(73) Titulaire: Chaudeurge, Jean-Michel Francois, 83170 Tourves (FR)
(72) Inventeur: Chaudeurge, Jean-Michel Francois, 83170 Tourves (FR)
(74) Mandataire: Grand, Guillaume
(86) Numéro de dépôt international: PCT/FR2006/000866
(87) Numéro de publication internationale: WO 2006/111656

(56) Documents cités:
- DE-A1- 19 823 070
- DE-U1- 20 312 334
- GB-A- 1 302 420
- US-B1- 6 394 633
- US-B1- 6 572 251
- US-B1- 6 644 826
- US-B1- 6 779 804

## Description

La présente invention concerne une voiture d'enfant, telle qu'une poussette, un landau ou un tricycle, c'est-à-dire, de manière plus générale, un véhicule sur roues destiné à transporter un enfant en bas âge, en étant poussé par une personne adulte.

En fonctionnement, l'adulte chargé de faire avancer ce type de voiture est nécessairement placé à l'arrière de la voiture, pour la pousser vers l'avant, en appliquant un effort de poussée correspondant, au niveau d'un ou de deux éléments de poussée, tels qu'une barre, des poignées, etc., agencés à l'arrière du cadre de la voiture.

Il en résulte une certaine insécurité pour l'enfant embarqué lorsque l'adulte doit s'engager dans un passage traversé transversalement par des véhicules rapides tels que des automobiles, car l'adulte, seul capable d'estimer les risques de collisions potentielles lors de l'avancée de la poussette, est à l'opposé de la partie avant du cadre de la voiture, c'est-à-dire à l'opposé de la zone de la poussette engagée en tête dans le passage dangereux. C'est notamment le cas lorsque la voiture d'enfant est poussée pour traverser une route, par exemple sur un passage piéton.

GB-A-1 302 420 a proposé, au début des années 1970, une poussette à roues non articulées par rapport à un cadre dont une barre d'extrémité avant est équipée d'un feu d'avertissement, destiné à avertir les conducteurs de véhicules mobiles se déplaçant à proximité de la poussette, par exemple lorsque cette dernière est engagée sur un passage-piéton. Ce feu d'avertissement est commandé par un commutateur arrière, actionnable par l'adulte qui pousse la poussette. Les risques de collision avec la poussette sont ainsi abaissés mais, en pratique, le système d'avertissement proposé n'est conçu que pour être rapporté sur le cadre pré-existant de la poussette, ce qui nuit considérablement à l'esthétique globale de cette dernière. En particulier, le boîtier du feu d'avertissement est attaché au cadre de la poussette par une bride volumineuse ou analogue, ce qui renforce l'effet peu avenant de « pièce rapportée ».

Plus récemment, US-B-6,394,633 a proposé un cadre de poussette à trois roues, dont une roue avant articulée. Un ou des phares, prévus à l'avant du cadre, émettent des faisceaux lumineux dirigés vers le sol, pour éclairer le cheminement de la poussette vers l'avant, ce qui ne permet cependant pas d'avertir efficacement les conducteurs de véhicules se déplaçant à proximité de la poussette, notamment ceux approchant de cette dernière transversalement. En outre, comme dans GB-A-1 302 420, ces phares sont conçus en tant que pièces rapportées au cadre de poussette pré-existant, le boîtier de chaque phare étant assemblé au cadre uniquement de manière juxtaposée.

Le but de la présente invention est de proposer une voiture d'enfant avec feu d'avertissement à l'avant, dont l'esthétique soit avenante, notamment au niveau de ce feu.

A cet effet, l'invention a pour objet une voiture d'enfant telle que définie à la revendication 1.

Avec la voiture d'enfant selon l'invention, les moyens d'articulation de la fourche avant par rapport au cadre peuvent être esthétiquement cachés dans le boîtier du feu d'avertissement. Ce boîtier se fond ainsi de manière avenante avec le cadre, en particulier avec sa partie avant. Autrement dit, la voiture d'enfant selon l'invention fournit une excellente intégration de son feu d'avertissement à son cadre. On comprend que ce boîtier peut ainsi présenter diverses formes extérieures dont l'esthétique, associée à celle de la partie avant du cadre et de la fourche, fournit avantageusement un effet de « signature » visuelle, propre à la voiture.

Lorsque la voiture d'enfant selon l'invention, poussée par l'arrière par une personne adulte, est sur le point d'être engagée dans un passage dangereux traversé transversalement par des véhicules se déplaçant à une vitesse relativement élevée, l'adulte actionne le commutateur pour allumer le feu d'avertissement afin de prévenir ces véhicules de la présence de la voiture d'enfant. Par exemple, lorsque la voiture d'enfant est engagée sur un passage piéton pour traverser une route, l'allumage du feu d'avertissement, commandé par la personne adulte, fournit un signal lumineux qui attire l'attention des conducteurs des automobiles et des autres véhicules roulant sur la route et risquant de heurter la voiture d'enfant. Comme ce feu d'avertissement est situé à l'avant du cadre de la voiture d'enfant, le signal lumineux qu'il émet parvient à ces conducteurs dès que l'avant de la poussette est engagé dans la zone dangereuse, alors que l'adulte poussant la voiture d'enfant est encore largement en retrait, vers l'arrière, de cette zone dangereuse. L'allumage et l'extinction du feu d'avertissement s'effectuent sans difficulté par l'adulte puisque le commutateur de commande est situé sur l'élément de poussée de la voiture d'enfant, autrement dit au niveau de la partie du cadre sur laquelle l'adulte positionne en permanence ses mains pour appliquer la poussée nécessaire à la propulsion de la voiture vers l'avant.

D'autres caractéristiques avantageuses de cette voiture d'enfant, prises isolément ou suivant toutes les combinaisons techniquement possibles, sont énoncées aux revendications dépendantes 2 à 12.

L'invention sera mieux comprise à la lecture de la description qui va suivre, donnée uniquement à titre d'exemple et faite en se référant aux dessins sur lesquels :
- la figure 1 est une vue en élévation d'une voiture d'enfant selon l'invention, de type poussette ; et
- la figure 2 est une vue schématique de la voiture de la figure 1, prise suivant la flèche II, illustrant l'utilisation de cette voiture ;
- la figure 3 est une vue en perspective d'une variante, selon l'invention, de la partie avant de la voiture de la figure 1 ; et
- la figure 4 est une vue schématique en perspective, sous un angle de vue différent de celui de la figure 3 et à plus grande échelle, d'une partie du feu avant de la voiture de la figure 3.

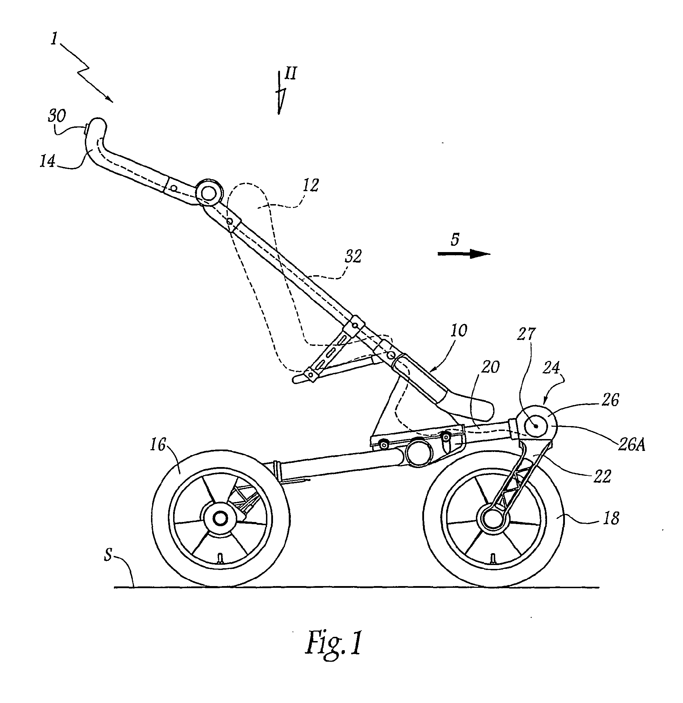

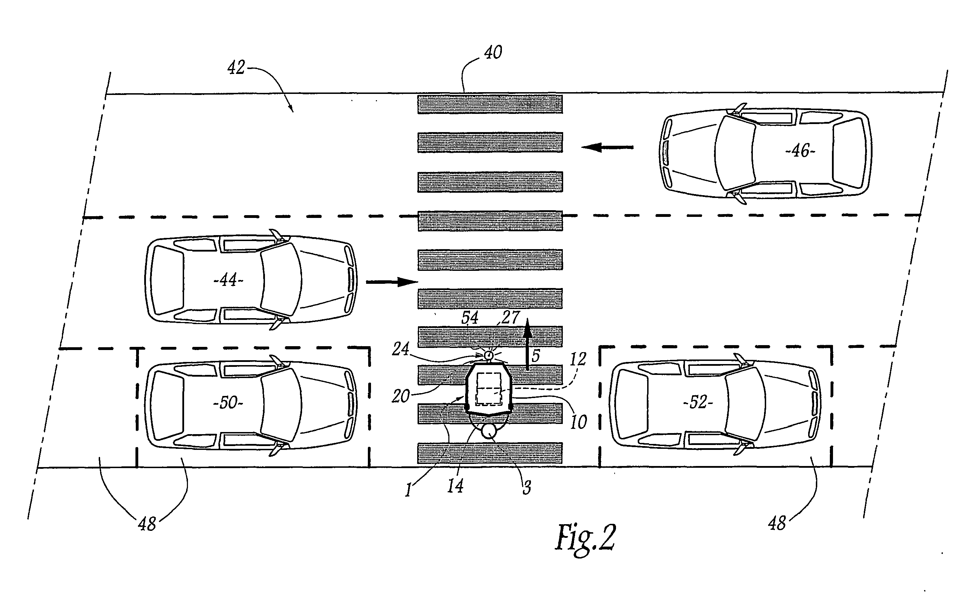

Sur les figures 1 et 2 est représentée une poussette 1 destinée à transporter un enfant en bas âge, en étant poussée sur le sol S par un adulte 3 représenté uniquement à la figure 2. La poussette comporte un cadre articulé 10 sur lequel est rapportée une assise 12, représentée uniquement en pointillés, dans laquelle l'enfant transporté est assis. Pour la clarté des dessins, l'enfant n'est pas représenté sur les figures. En variante non représentée, l'assise 12 peut être remplacée par un couchage ou analogue permettant de transporter l'enfant en position allongée. Le cadre 10 représenté aux figures n'est qu'un exemple illustratif d'un cadre de poussette envisageable dans le cadre de la présente invention, d'autres structures de cadre, articulées ou non, pouvant être prévues.

Par commodité, la suite de la description sera orientée par rapport au cadre 10 de la poussette 1, de sorte que les termes « supérieur » et « haut » désignent une direction dirigée à l'opposé du sol S et correspondant à la partie haute de la figure 1, tandis que les termes « inférieur » et « bas » désignent une direction opposée, la flèche d'observation II de la figure 2 par rapport à la figure 1 pointant ainsi vers le bas.

De même, les termes « avant » et « arrière » s'entendent par rapport à la direction normale d'avancée de la poussette 1, c'est-à-dire de la direction suivant laquelle cette poussette est normalement poussée, comme indiqué par une flèche 5 aux figures 1 et 2, qui pointe vers l'avant. De la même façon, les termes « gauche » et « droit » sont définis par rapport à la direction d'avancée de la poussette 1, de sorte qu'ils désignent respectivement les parties gauche et droite de la figure 2, tandis que seul le côté droit de la poussette 1 est visible à la figure 1.

Le cadre 10 est équipé, dans sa partie haute, d'une barre de poussée 14 s'étendant transversalement à la direction d'avancée de la poussette, sur sensiblement toute la largeur du cadre. Cette barre est située à l'arrière et en saillie du reste du cadre 10, pour être saisie par l'adulte 3 lorsque ce dernier souhaite pousser la poussette dans la direction de la flèche 5. Vu de dessus, la barre 14 présente une forme globale en V aplatie, dont la pointe est dirigée vers l'arrière, comme représenté à la figure 2. Cette forme facilite la préhension de la barre par l'adulte 3 qui peut ainsi saisir naturellement cette barre par ses deux mains pour appliquer à la poussette un effort de poussée vers l'avant et un effort de changement de direction lorsqu'il convient de faire tourner la poussette.

Le cadre 10 repose sur le sol S par trois roues, à savoir deux roues arrière latérales 16 gauche et droite, ainsi qu'une roue avant médiane 18. Le cadre 10 comporte une tige avant médiane 20, qui s'étend suivant la direction de la flèche 5 et à l'extrémité avant de laquelle est articulée une fourche 22 reliant le cadre 10 à la roue avant 18.

La poussette 1 comporte en outre un feu d'avertissement 24 agencé à l'extrémité avant et dans la partie médiane du cadre 10. Plus précisément, ce feu 24 comprend un boîtier externe creux 26 globalement sphérique et solidarisé de manière fixe à l'extrémité avant de la tige 20 du cadre 10, de manière saillante vers l'avant. Le boîtier 26 forme un enjoliveur pour la zone d'articulation entre la fourche 22 et cette tige 20, conférant à la partie avant de la poussette 1 une esthétique avenante.

A l'intérieur du boîtier 26, le feu 24 comprend une source lumineuse, indiquée uniquement de manière schématique sur les figures par un point référencé 27, telle qu'une ampoule ou analogue, destinée à produire un signal lumineux lorsque cette source est alimentée en électricité.

Avantageusement, le feu 24 est associée à une unité d'alimentation électrique à même de faire clignoter la source lumineuse précitée, de sorte que le signal lumineux émis s'apparente à un clignotement associé, dans l'esprit d'un automobiliste et, plus généralement, d'un usager de la route, à un clignotement de type feu de détresse ou « warning », caractéristique d'un véhicule arrêté ou circulant à une vitesse anormalement lente.

Le boîtier 26 protège la source lumineuse et son unité d'alimentation électrique vis-à-vis de l'extérieur, notamment vis-à-vis des intempéries et des chocs.

Ce boîtier 26 est en outre démontable pour permettre, si nécessaire, de remplacer la source lumineuse et/ou son unité d'alimentation.

Pour renforcer la sécurité de la poussette 1, chaque côté gauche et droit du boîtier 26 du feu 24 est réalisé sous la forme d'un méplat 26A s'étendant de manière sensiblement verticale par rapport au sol S. Chacun de ces méplats est revêtu d'un habillage catadioptrique destiné à réfléchir la lumière lorsqu'il est éclairé par un faisceau lumineux transversal à la direction de la flèche 5.

Pour commander l'alimentation en électricité de la source lumineuse 27 du feu 24, la poussette 1 est munie d'un commutateur 30 portée par la barre de poussée 14. Ce commutateur est situé au niveau de la zone de la barre 14 destinée à être saisie par les mains de l'adulte 3 en charge de pousser la poussette 1 et est actionnable par un simple appui du doigt ou un geste analogue. Le commutateur 30 est relié électriquement au feu 24, de préférence par des conducteurs électriques basse tension 32 qui s'étendent à l'intérieur du cadre creux 10. Le cheminement des conducteurs 32 est représenté très schématiquement en traits pointillés à la figure 1. D'un point de vue fonctionnel, ce commutateur s'apparente à un interrupteur pour le circuit d'alimentation électrique de la source lumineuse 27 du feu 24, la nature de cet interrupteur pouvant aussi bien être mécanique, en réalisant la partie actionnable de ce commutateur sous la forme d'un bouton contacteur, que fluidique, en réalisant cette partie actionnable sous la forme d'un bouton à membrane de pression.

La partie actionnable du commutateur 30 porte extérieurement une signalétique représentative de sa fonction de commande du feu 24. En particulier, ce bouton porte un pictogramme en forme de triangle, couramment associé au feu de détresse précité.

L'utilisation de la poussette 1, notamment de son feu d'avertissement 24, va maintenant être décrite en regard de la figure 2.

Sur la figure 2, l'adulte 3, qui pousse la poussette 1, engage cette dernière sur un passage piéton 40 traversant transversalement une route 42, une automobile 44 s'approchant du passage 40 par la gauche tandis qu'une automobile 46 s'en approche par la droite. Le route 42 est bordée par des places de stationnement 48, entre deux desquelles le passage 40 s'amorce en direction du côté opposé de la route, des automobiles immobiles 50 et 52 étant stationnées respectivement à gauche et à droite du passage 40.

Au moment où l'adulte 3 engage la poussette 1 sur le début du passage piéton 40, il actionne le commutateur 30 de manière à commander l'alimentation électrique de la source lumineuse du feu 24, qui produit alors un signal lumineux clignotant référencé 54 à la figure 2. Ce signal est visible par l'adulte 3, qui contrôle ainsi instantanément le bon allumage du feu 24.

Dès que la poussette 1 est suffisamment avancée par l'adulte 3 pour que son feu 24 ne soit plus masqué par les automobiles stationnées 50 et 52 pour les automobilistes au volant des automobiles 44 et 46, c'est-à-dire dès que l'extrémité avant de la poussette portant le feu 24 est avancée à proximité ou légèrement au-delà de la ligne reliant les flancs des automobiles 50 et 52 tournés vers la route 42, comme à la figure 2, ces automobilistes sont prévenus de la présence de la poussette 1. Le signal clignotant 54 émis par le feu 24 est naturellement associé par ces automobilistes à un véhicule en détresse ou circulant à une vitesse anormalement lente, de sorte que, par réflexe, ils commandent le ralentissement de leur automobile, voire son arrêt. Ainsi, même si les côtés latéraux gauche et droit du passage piéton 40 sont plus ou moins masqués à l'adulte 3 par les automobiles stationnées 50 et 52, cet adulte prévient les usagers de la route 42 qu'il compte traverser cette route, en poussant devant lui la poussette 1. A cet effet, on comprend que le feu 24 émet avantageusement le signal 54 dans toutes les directions horizontales, la périphérie horizontale du boîtier 26 étant aménagée à cette fin.

Une fois la route 42 complètement traversée, l'adulte 3 commande l'extinction du feu 24 par le commutateur 30.

En complément ou indépendamment de l'allumage du feu 24, les zones catadioptriques 26A du boîtier 26 du feu 24 reflètent vers la gauche et vers la droite d'éventuels faisceaux lumineux les éclairant, en particulier des faisceaux provenant des phares avant des automobiles 44 et 46.

D'autres cas de sollicitation du feu 24 que la traversée d'une route sont bien entendu envisageables, par exemple lors de la progression de la poussette le long d'un chemin étroit, dans le cas d'une faible luminosité, etc.

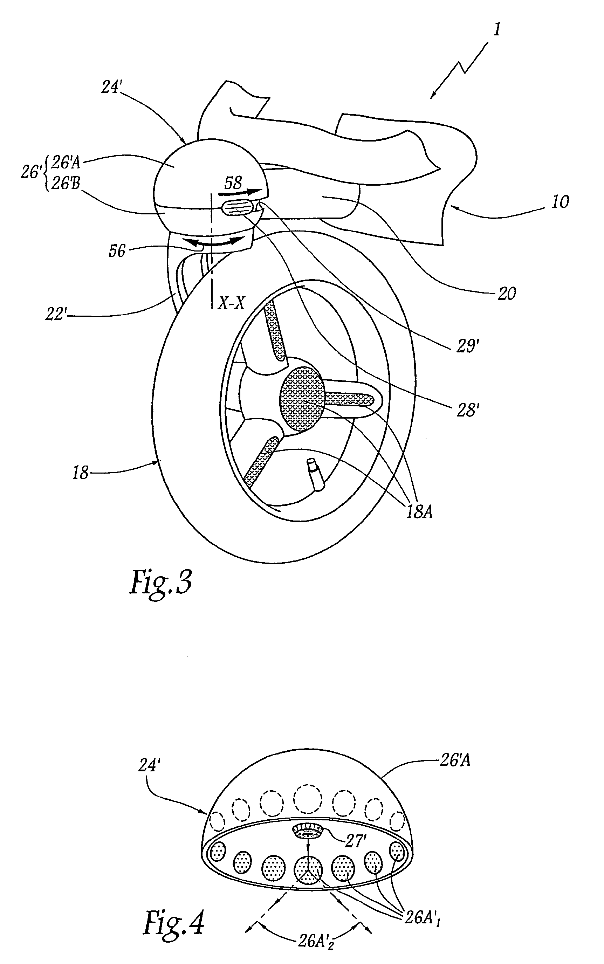

Sur la figure 3, pour laquelle des conventions d'orientation en ce qui concerne les termes « haut », « bas », « gauche », « droit », etc. s'appliquent de la même façon qu'aux figures précédentes, est représentée une variante de la partie d'extrémité avant de la poussette 1. La partie de cadre et la roue de cette partie de poussette sont respectivement analogues aux éléments correspondants de la poussette représentée à la figure 1 et sont visés par les mêmes références numériques, à savoir 10 pour le cadre, 18 pour la roue avant et 20 pour la tige du cadre à l'extrémité avant de laquelle la roue 18 est agencée. Cette variante comporte un feu d'avertissement 24' de fonction analogue au feu 24 et associé aux mêmes composants que le feu 24 pour produire un signal lumineux clignotant commandé par le commutateur arrière 30.

Le feu 24' se distingue essentiellement du feu 24 par son boîtier externe de protection 26' situé à l'extrémité avant de la tige 20. Le boîtier 26', de forme globalement sphérique, comporte, d'une part, une calotte supérieure 26'A sensiblement hémisphérique et réalisée en une matière translucide pour laisser passer le signal émis par la source lumineuse interne au boîtier et, d'autre part, une embase inférieure 26'B en forme de demi-sphère tronquée en partie basse et réalisée en une matière opaque. De la sorte, seule la demi-sphère supérieure 26'A s'éclaire dans sa totalité lors de l'allumage du feu.

La forme globale sphérique du boîtier 26' confère à la partie avant de la poussette 1 une esthétique originale qui s'apparente à une « signature » visuelle associée à la poussette, tout en permettant d'y intégrer des fonctionnalités techniques détaillées ci-dessous.

Avantageusement, la calotte supérieure 26'A est réalisée en polycarbonate cristal, la source lumineuse du feu émettant une lumière colorée, notamment orange. Cette source lumineuse est de préférence constituée d'une ou de plusieurs DEL (diodes électroluminescentes) qui ont pour avantage, entre autres, d'avoir une très longue durée de vie. Dans ce cas, la calotte 26'A peut être verrouillée à demeure sur l'embase 26'B avec une étanchéité résistante dans le temps. De même, en prévoyant que l'unité d'alimentation électrique de la source lumineuse du feu n'est pas stockée à l'intérieur du boîtier 26', mais qu'elle est par exemple rapportée sous le cadre 10, la calotte 26'A est avantageusement scellée à vie, étant entendu que des conducteurs électriques analogues aux conducteurs 32 relient alors l'unité d'alimentation au(x) DEL(s) constituant la source lumineuse.

Comme représenté plus en détail à la figure 4, la calotte supérieure 26'A est munie, de manière optionnelle, d'une pluralité de facettes internes lenticulaires 26'A₁, réparties suivant la périphérie de la calotte de manière sensiblement uniforme. Chaque facette 26'A₁ est adaptée pour former un faisceau lumineux divergent 26'A₂ s'éloignant du feu 24' lorsque cette facette est éclairée par l'intérieur. A cet effet, la source lumineuse 27' interne au boîtier 26' comporte avantageusement une couronne de DEL, avec au moins une DEL disposée en regard de chaque facette 26'A₁. En service, les faisceaux 26'A₂ éclairent ainsi conjointement toutes les directions horizontales s'étendant depuis le feu 24', ce qui garantit un avertissement lumineux omnidirectionnel, y compris pour, par exemple, des automobilistes s'approchant latéralement de la poussette comme à la figure 2.

A la différence du boîtier 26, aucune zone catadioptrique n'est prévue sur le boîtier 26', des habillages catadioptriques 18A recouvrant toutefois les extrémités du moyeu et les rayons de la roue avant 18.

La face inférieure tronquée de l'embase 26'B forme un plan d'accolement pour l'extrémité supérieure d'une fourche mono-bras 22' reliant le moyeu de la roue avant 18 au cadre 10. De la même façon que la fourche 22 de la figure 1, la fourche 22' est articulée par rapport au cadre, en pouvant notamment tourner autour d'un axe X-X sensiblement vertical, le chant d'extrémité supérieure de la fourche glissant alors contre la face inférieure tronquée de l'embase 26'B, comme indiqué par une flèche 56.

Les moyens d'articulation de la fourche 22' par rapport au cadre 10, cachés dans le boîtier 26', peuvent être verrouillés par un verrou 28' monté à coulissement dans une rainure complémentaire 29' ménagée suivant le plan de joint de la demi-sphère supérieure 26'A et de l'embase inférieure 26'B du boîtier. Au moyen d'un mécanisme de verrouillage interne au boîtier 26', le déplacement du verrou 28' le long de la rainure 29', comme indiqué par une flèche 58, permet de bloquer, de manière réversible, l'orientation de la fourche 22', et ainsi celle de la roue avant 18, par rapport au cadre 10. La direction d'avancée de la poussette est alors sensiblement fixe.

En variante non représentée, le mécanisme de verrouillage précité, interne au boîtier 26', inclut un électro-aimant connecté à l'unité d'alimentation électrique associée au feu 24', que cette unité soit interne ou externe au boîtier. Cet électro-aimant est commandé depuis l'extérieur du boîtier 26', notamment de la même façon que le feu, c'est-à-dire par un bouton de commutation spécifique, porté par la barre de poussée 14. Des conducteurs, analogues aux conducteurs 32, sont intégrés dans le cadre creux 10. Dans ce cas, le verrou 28' et la rainure 29' ne sont pas utiles, sauf à les utiliser comme moyens de commande alternatifs, actionnables manuellement, par exemple en cas de disfonctionnement de l'électro-aimant.

Un autre mode de réalisation non représenté d'une voiture d'enfant selon l'invention consiste à équiper un cadre de tricycle d'un feu d'avertissement analogue au feu 24 et commandé par un adulte chargé de pousser ce tricycle au moyen d'une canne de poussée, rapportée de façon démontable à l'arrière du cadre de tricycle. Cette canne amovible est équipée d'un commutateur analogue au commutateur 30, tandis que des moyens amovibles de connexion électrique entre le commutateur et le feu sont prévues sur le cadre et la canne pour permettre la commande, par ce commutateur, de l'allumage et de l'extinction du feu depuis la canne de poussée arrière lorsque cette dernière est assemblée au cadre.

Divers aménagements et variantes à la poussette et au tricycle décrits ci-dessus sont en outre envisageables. A titre d'exemples :
- plutôt que de prévoir une unique roue avant, le cadre de la voiture d'enfant peut être équipé d'un train médian de deux roues avant, relié au cadre par une fourche en forme de potence, ou bien le cadre peut être équipé de deux roues avant latérales, le feu 24 ou 24' étant alors agencé au niveau d'une partie du cadre suffisamment en saillie vers l'avant par rapport au reste du cadre ;
- d'autres formes que la barre 14 sont envisageables en tant qu'élément(s) de poussée de la poussette, par exemple des poignées latérales gauche et droite, un arceau en forme de guidon, etc. ;
- outre des cadres de poussette et de tricycle, l'invention s'applique également à un cadre de landau ou analogue ;
- plusieurs feux analogues au feu 24 ou 24' peuvent être prévus sur un même cadre de voiture d'enfant, pour améliorer la sécurité et/ou pour des raisons esthétiques ;
- les conducteurs électriques reliant le feu 24 ou 24' à son commutateur de commande 30, ainsi que, le cas échéant, ceux reliant l'électro-aimant de verrouillage de la fourche 22' à son commutateur de commande, peuvent être remplacés par des systèmes sans fil, tels qu'un système de radiocommandé ou un système à infra-rouge ;
- des moyens d'alarme sonore de présence peuvent être associés au feu 24 ou 24' ; par exemple sous la forme d'un avertisseur piétonnier musical ; ces moyens d'alarme sonore, avantageusement alimentés par l'unité d'alimentation électrique associée au feu, sont commandés simultanément ou indépendamment du feu, par le biais de contacteurs jumelés ; et/ou
- la source lumineuse du feu 24 ou 24' peut inclure ou être constituée d'une ou de plusieurs lampes-flash, notamment de couleur blanche et associées à une calotte de boîtier colorée ; de telles lampes-flash présentent l'avantage de consommer peu d'électricité, tout en fournissant un signal efficace et puissant, de type éclair ; comme ce signal est émis sur sensiblement toute la périphérie du boîtier de feu, la zone périphérique arrière du boîtier, c'est-à-dire la zone tournée vers l'enfant embarqué dans la voiture et vers l'adulte poussant cette voiture, est recouverte d'un cache opaque, pour éviter leur éblouissement.

## Revendications

1. Voiture d'enfant (1), comprenant un cadre (10) de support d'une assise (12) ou d'un couchage pour l'enfant, ce cadre étant équipé, d'une part, d'un feu avant d'avertissement (24 ; 24'), comprenant au moins une source lumineuse (27 ; 27') et un boîtier externe (26 ; 26') de protection de cette source lumineuse, et, d'autre part, d'au moins un élément arrière (14) de poussée de la voiture muni d'un commutateur (30) commandant l'allumage et l'extinction de la source lumineuse, **caractérisée en ce que** le cadre (10) est équipé d'une roue avant (18) d'appui sur le sol (S), reliée au cadre par une fourche (22 ; 22') articulée par rapport au cadre, le boîtier (26 ; 26') du feu (24 ; 24') formant au moins en partie un enjoliveur de la zone d'articulation de la fourche par rapport au cadre.

2. Voiture suivant la revendication 1, **caractérisée en ce que** le boîtier (26') du feu (24') comporte, d'une part, une calotte supérieure (26'A) sensiblement hémisphérique et réalisée en une matière translucide pour laisser passer le signal émis par la source lumineuse (27') interne au boîtier et, d'autre part, une embase inférieure (26'B) en forme de demi-sphère tronquée en partie basse et réalisée en une matière opaque.

3. Voiture suivant la revendication 2, **caractérisée en ce que** la face inférieure tronquée de l'embase (26'B) forme un plan d'accolement et de glissement (flèche 56) pour l'extrémité supérieure de la fourche articulée (22').

4. Voiture suivant l'une des revendications 2 ou 3, **caractérisée en ce que** la calotte supérieure (26'A) est munie d'une pluralité de facettes internes lenticulaires (26'A₁) réparties suivant la périphérie de la calotte, au moins une DEL de la source lumineuse (27') étant avantageusement disposée en regard de chaque facette.

5. Voiture suivant l'une quelconque des revendications précédentes, **caractérisée en ce qu'**elle comprend un mécanisme de verrouillage adapté pour bloquer, de manière réversible, l'orientation de la fourche (22') par rapport au cadre (10), ce mécanisme étant interne au boîtier (26').

6. Voiture suivant l'une quelconque des revendications précédentes, **caractérisée en ce que** le feu (24 ; 24') est associé à des moyens d'alimentation électrique de sa source lumineuse (27 ; 27'), adaptés pour faire clignoter cette source.

7. Voiture suivant les revendications 5 et 6 prises ensemble, **caractérisée en ce que** le mécanisme de verrouillage inclut un électro-aimant connecté aux moyens d'alimentation électrique et avantageusement commandé par un commutateur porté par l'élément de poussée (14).

8. Voiture suivant l'une quelconque des revendications précédentes, **caractérisée en ce que** le feu (24 ; 24') est agencé au moins partiellement en saillie vers l'avant à partir d'une partie d'extrémité avant (20) du cadre (10).

9. Voiture suivant l'une quelconques des revendications précédentes, **caractérisée en ce que** le boîtier (26) du feu (24) est muni sur sa face externe d'au moins une zone catadioptrique (26A).

10. Voiture suivant l'une quelconque des revendications précédentes, **caractérisée en ce que** l'élément de poussée (14) est porté à demeure par le cadre (10), des moyens (32) de liaison électrique entre le commutateur (30) et le feu (24; 24') étant intégrés au cadre.

11. Voiture suivant l'une quelconque des revendications 1 à 9, **caractérisée en ce que** l'élément de poussée est relié de façon démontable au cadre et associé à des moyens amovibles de connexion électrique entre le commutateur et le feu.

12. Voiture suivant l'une quelconque des revendications précédentes, **caractérisée en ce que** le cadre est un cadre de poussette (10), de landau ou de tricycle.

## Claims

1. A child's carriage (1), comprising a frame (10) supporting a seat (12) or a cot for the child, the frame being fitted firstly with a front warning light (24; 24') having at least one light source (27; 27'), and an outer housing (26; 26') for protecting the light source, and secondly with at least one rear thrust element (14) for pushing the carriage and provided with a switch (30) for switching the light on and off, the carriage being **characterized in that** the frame (10) is fitted with a front wheel (18) for bearing on the ground (S) and connected to the frame by a fork (22; 22') that is swivel-mounted relative to the frame, the housing (26; 26') of the light (24; 24') forming at least in part a decorative covering for the zone where the fork is swivel-mounted relative to the frame.

2. A carriage according to claim 1, **characterized in that** the housing (26') of the light (24') comprises firstly a substantially hemispherical top cap (26'A) made of a translucent material to pass the signal emitted by the light source (27') inside the housing, and secondly a bottom base (26'B) in the form of a hemisphere with a truncated bottom portion and made of an opaque material.

3. A carriage according to claim 2, **characterized in that** the truncated bottom face of the base (26'B) forms a docking and sliding (arrow 56) plane for the top end of the swivel-mounted fork (22').

4. A carriage according to claim 2 or claim 3, **characterized in that** the top cap (26'A) is provided with a plurality of lens-forming internal facets (26'A₁) distributed around the periphery of the cap, with at least one LED of the light source (27') being advantageously disposed facing each facet.

5. A carriage according to any preceding claim, **characterized in that** it includes a locking mechanism adapted to act in reversible manner to block the orientation of the fork (22') relative to the frame (10), said mechanism being internal to the housing (26').

6. A carriage according to any preceding claim, **characterized in that** the light (24; 24') is associated with electrical power supply means for the light source (27; 27') that are adapted to cause the source to flash.

7. A carriage according to claims 5 and 6 taken together, **characterized in that** the locking mechanism includes an electromagnet connected to the electrical power supply and advantageously controlled by a switch carried by the thrust element (14).

8. A carriage according to any preceding claim, **characterized in that** the light (24; 24') is arranged at least in part to project forwards from a front end portion (20) of the frame (10).

9. A carriage according to any preceding claim, **characterized in that** the housing (26) of the light (24) is provided on its outside face with at least one retro-reflector zone (26A).

10. A carriage according to any preceding claim, **characterized in that** the thrust element (14) is permanently secured to the frame (10), electrical connection means (32) between the switch (30) and the light (24; 24') being integrated in the frame.

11. A carriage according to any one of claims 1 to 9, **characterized in that** the thrust element is releasably connected to the frame and is associated with separable electrical connection means between the switch and the light.

12. A carriage according to any preceding claim, **characterized in that** the frame is a frame of a stroller (10), of a baby carriage, or of a tricycle.

## Patentansprüche

1. Kinderwagen (1), einen Trägerrahmen (10) für einen Sitz (12) oder ein Bett für das Kind umfassend, wobei dieser Rahmen einerseits mit einem vorderen Warnlicht (24; 24'), das mindestens eine Lichtquelle (27; 27') und ein äußeres Schutzgehäuse (26, 26') für diese Lichtquelle umfasst, und andererseits mit mindestens einem hinteren Element (14) zum Schieben des Wagens ausgerüstet ist, das mit einem Schalter (30) zum Einschalten und Ausschalten der Lichtquelle versehen ist, **dadurch gekennzeichnet, dass** der Rahmen (10) mit einem Vorderrad (18) zur Auflage auf den Boden 8s), ausgerüstet ist, das mit dem Rahmen durch eine Gabel (22, 22') verbunden ist, die in Bezug auf den Rahmen gelenkig gelagert ist, wobei das Gehäuse (26, 26') des Warnlichts (24, 24') mindestens teilweise eine Kappe für die Anlenkzone der Gabel in Bezug auf den Rahmen bildet.

2. Wagen nach Anspruch 1, **dadurch gekennzeichnet, dass** das Gehäuse (26') des Warnlichts (24') einerseits eine im Wesentlichen halbkugelförmige obere Kalotte (26'A), die aus einem durchscheinenden Material hergestellt ist, um das Signal, das von der in dem Gehäuse angeordneten Lichtquelle (27') ausgesandt wird, hindurch zu lassen, und andererseits einen unteren Sockel (26'B) in Form einer im unteren Bereich geschnittenen Halbkugel, die aus einem opaken Material hergestellt ist, aufweist.

3. Wagen nach Anspruch 2, **dadurch gekennzeichnet, dass** die untere abgestumpfte Fläche des Sockels (26'B) eine Lager- und Gleitebene (Pfeil 56) für das obere Ende der angelenkten Gabel (22') bildet.

4. Wagen nach einem der Ansprüche 2 oder 3, **dadurch gekennzeichnet, dass** die obere Kalotte (26'A) mit einer Mehrzahl von linsenförmigen Innenfacetten (26'A₁) versehen ist, die um den Umfang der Kalotte verteilt sind, wobei mindestens eine LED der Lichtquelle (27') vorteilhafterweise gegenüberliegend zu jeder Facette angeordnet ist.

5. Wagen nach einem beliebigen der vorhergehenden Ansprüche, **dadurch gekennzeichnet, dass** er einen Verriegelungsmechanismus umfasst, der angepasst ist, in reversibler Weise die Ausrichtung der Gabel (22') in Bezug auf den Rahmen (10) zu blockieren, wobei dieser Mechanismus innerhalb des Gehäuses liegt.

6. Wagen nach einem beliebigen der vorhergehenden Ansprüche, **dadurch gekennzeichnet, dass** das Warnlicht elektrischen Versorgungsmittel seiner Lichtquelle (27; 27') zugeordnet ist, die angepasst sind, die Quelle blinken zu lassen.

7. Wagen nach den Ansprüchen 5 und 6 zusammengenommen, **dadurch gekennzeichnet, dass** der Verriegelungsmechanismus einen Elektromagneten einschließt, der mit den elektrischen Versorgungsmitteln verbunden ist und vorteilhafterweise von einem Schalter gesteuert wird, der von dem Schiebeelement (14) getragen wird.

8. Wagen nach einem beliebigen der vorhergehenden Ansprüche, **dadurch gekennzeichnet, dass** das Warnlicht (24; 24') zumindest teilweise von einem vorderen Endteil (20) des Rahmens (10) nach vorne hervorspringend angeordnet ist.

9. Wagen nach einem beliebigen der vorhergehenden Ansprüche, **dadurch gekennzeichnet, dass** das Gehäuse (26) des Warnlichts (24) auf seiner Außenfläche mit mindestens einer katadioptrischen Zone (26A) versehen ist.

10. Wagen nach einem beliebigen der vorhergehenden Ansprüche, **dadurch gekennzeichnet, dass** das Schiebeelement (14) dauerhaft von dem Rahmen (10) getragen wird, wobei elektrische Verbindungsmittel (32) zwischen dem Schalter (30) und dem Warnlicht (24,24') in den Rahmen integriert sind.

11. Wagen nach einem beliebigen der Ansprüche 1 bis 9, **dadurch gekennzeichnet, dass** das Schiebeelement mit dem Rahmen in demontierbarer Weise verbunden ist und lösbaren elektrischen Verbindungsmitteln zwischen dem Schalter und dem Warnlicht zugeordnet ist.

12. Wagen nach einem beliebigen der vorhergehenden Ansprüche, **dadurch gekennzeichnet, dass** der Rahmen ein Rahmen für einen Sportwagen, einen Kinderwagen oder ein Dreirad ist.
